# EUROPEAN PATENT SPECIFICATION

(11) **EP 1 615 003 B1**
(45) Date of publication and mention of the grant of the patent: **20.08.2014**
(21) Application number: 04425505.7
(22) Date of filing: 09.07.2004
(51) Int. Cl.: G01F 11/02, A23G 3/00, A23G 7/00, B65B 37/06

(54) **Dropwise metering machine**
Tropfendosiervorrichtung
Doseuse goutte-à-goutte

(43) Date of publication of application: 11.01.2006
(73) Proprietor: SOREMARTEC S.A., 2632 Findel (LU); Ferrero S.p.A., 12051 Alba (Cuneo) (IT); FERRERO OFFENE HANDELSGESELLSCHAFT m.b.H., 35260 Stadtallendorf (DE)
(72) Inventor: Giamello, Bruno, 12051 Alba (Cuneo) (IT)
(74) Representative: Rambelli, Paolo

(56) References cited:
- EP-A- 0 401 510
- FR-A- 2 683 161
- GB-A- 784 064
- US-A- 3 940 226
- US-A- 5 016 690
- US-A- 5 480 664

## Description

The present invention relates to a process for the dropwise deposition of metered quantities of a fluid or semi-fluid substance on a substrate in relative movement with respect to the metering machine.

The process of the invention makes use of a metering machine of the type comprising:
- a support structure;
- a chamber containing the substance to be metered, associated with the support structure, communicating with at least one metering duct provided at its end opposite the chamber with a delivery nozzle;
- valve means interposed between the duct and the nozzle which, in their normally closed position, prevent the flow of the substance from the duct to the nozzle;
- at least one piston mounted to slide in a leak-tight manner in the metering duct and moving in an alternating manner between a retracted position, in which the substance is able to flow from the tank to the metering duct, and a forward position, the displacement of the piston between the retracted position and the forward position causing the valve means to open and the metered quantity of substance contained in the metering duct to be expelled via the nozzle; and
- actuator means borne by the support structure and adapted to cause the alternating movement of the piston within the metering duct.

Document US 4 787 534 discloses a dropper machine having the characteristics set out above and used in particular for the dropwise provision of sorbitol in the liquid state. This US Patent addresses the technical problem of avoiding the risk of clogging of the dropper duct and the blocking of the piston which, in the machine structure as disclosed, moves within a tubular member passing through the tank for the fluid to be metered.

GB 784 064 A describes a method for depositing pre-determined quantities of viscous syrups with the use of an apparatus having the feature of the metering machine as defined in the preamble of claim 1.

Similar dosing devices are also described by US-A-5 016 690 and EP-A-0 401 510 for use in a method for filling packages or containers with a flowable product.

FR-A-2 683 161 describes a nozzle for delivering liquid or pasty products in the form of a truncated cone with inclined ejection channels.

The problem underlying the present invention is that of providing a metering machine which makes it possible to deposit, on a substrate, metered quantities of a fluid or semi-fluid substance configured as drops, or configured substantially as spherical caps, even when its substrate is provided with a relative movement with respect to the machine, i.e. with respect to its delivery nozzle.

Within the problem mentioned above, a particular problem resolved by the invention is that of obtaining a deposition of drops on a moving substrate, avoiding the formation on the substrate of drop trails which are not aesthetically acceptable.

The problems that the invention is intended to resolve are particularly evident in the field of the industrial production of food products, for instance tarts or the like, where the deposition of drops of a substance in the fluid state, such as chocolate or a sugar fluid able to harden at ambient temperature, is used not just as an organoleptic additive, but in particular as a decoration which therefore has to satisfy precise requirements from an aesthetic point of view.

An example in this respect is the deposition, on a bed of a baked product being fed continuously on a conveyor belt, of a plurality of drops of chocolate spaced with a predetermined pitch and disposed in formations extending at right angles to the direction of forward movement of the bed, where - following the dropwise decoration and/or filling - the bed is adapted to be divided into portions, each of which has to comprise the drop decoration comprising one or a plurality of drops disposed in formation.

The solution in which the food substrate is moved forward in sections with a discontinuous movement with respect to the dropper device so as to carry out the metered deposition during its brief dwell time is obviously not desirable as these dwell times reduce the productivity of the plant and are generally not very compatible with the subsequent processing stages which may be carried out continuously.

A solution to the problem could lie in associating the metering machine with drive means which cause the metering machine to move together with the substrate, at least over a section of its forward movement, thus carrying out the deposition in conditions in which there is no relative movement.

This possibility, in particular in the case of industrial production of the type mentioned above, is not desirable as it requires bulky and costly machinery.

The present invention provides a process which makes use of a metering machine having a simple and economic structure adapted to resolve the above-mentioned problems and particularly suitable for use in large-scale industrial production.

The process of the invention is defined bv the appended claims.

The process of the invention makes use of a metering machine of the type mentioned above, wherein the actuator means are adapted to provide the piston, in its forward stroke from the retracted position to the forward position, with a high kinetic energy sufficiently hiah such as to cause the deposition of the substance to be metered, configured as drops which are expelled violently as through they were projectiles. These drops may be delivered at a high frequency, providing a large number of small metered quantities which follow one another continuously.

The plug flow of the metered quantity is therefore configured as an extremely rapid series of intermittent jets of product from the nozzle with very high instantaneous flow rates. These jets, delivered at a high frequency, make it possible to provide a large number of small metered quantities (drops) per unit of time and consequently the deposition (metering) of large quantities of product (even some tens of quintal/hour) as required by industrial mass production, even though the machine is a metering machine of relatively modest dimensions.

The term "plug" flow is understood as a flow in which the metered quantity of fluid or semi-fluid substance contained in the metering duct behaves, in its flow through this duct and/or through the nozzle, substantially as a solid body, i.e. the flow of the substance through the metering duct or through the discharge duct in the nozzle has a velocity profile which is substantially uniform with respect to the cross-section of these ducts.

It will be appreciated that the kinetic energy required to achieve this flow may be determined as a function of the rheological properties of the fluid to be metered and as a function of the radial dimension of the ducts.

Further characteristic features and advantages of the process of the invention are set out in the following detailed description, given purely by way of non-limiting example, and made with reference to the accompanying drawings, in which:
Fig. 1 is a diagrammatic view illustrating the operating principle of the metering machine;
Fig. 2 is a diagram illustrating the angular velocity profile as a function of the angular position of the drive shaft, in relation to the embodiment of the machine of Fig. 1; and
Fig. 3 is a cross-sectional view showing a constructional detail of the machine of Fig. 1.

In the drawings, comprises a machine, shown overall by 2, comprises a support structure 4 which bears a drive unit 6 and a metering unit 8. The support structure 4 may for instance be formed by a slide, the height of whose position may be adjusted.

The metering unit 8 comprises a chamber or tank 10 into which the substance C to be metered is supplied via a lateral duct 12. The chamber 10 communicates with a metering duct 14 in which the substance C to be metered may flow by gravity; the chamber 10 is preferably kept at a slight overpressure, for instance by means of supply means for the substance to be metered (not shown) associated with the duct 12.

A piston 16 is mounted to slide in a leak-tight manner in a duct 18 communicating with the chamber 10 and axially aligned with the metering duct 14.

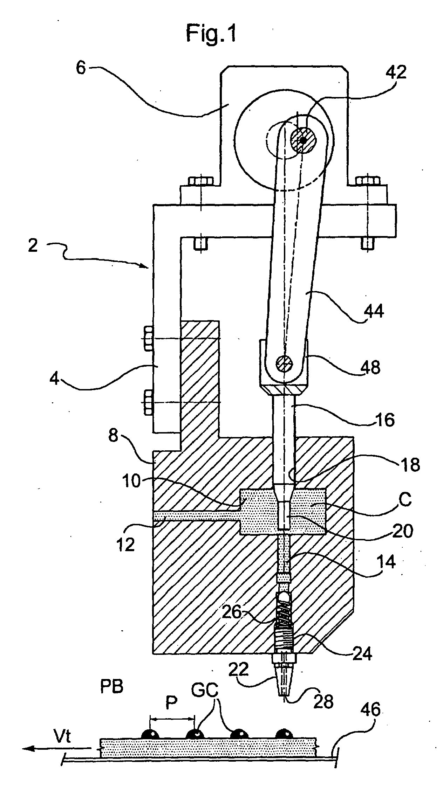

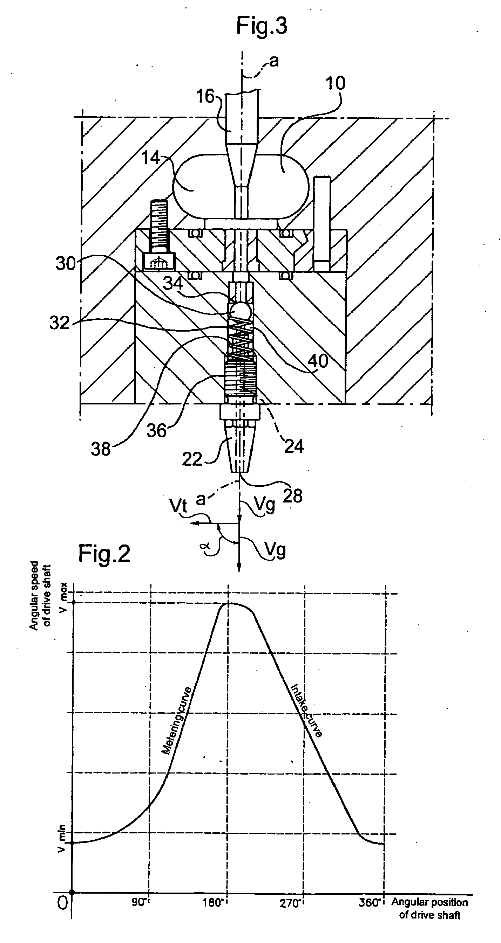

The piston 16 may move, with an alternating linear movement, between a retracted, beginning-of-stroke position - in which the end 20 of the piston 16 is outside the metering duct 14 and inside the chamber 10 - so as to enable the substance to be metered to flow into the duct 14 (Figs. 1 and 3) and a forward, end-of-stroke position (not shown) in which the end 20 of the piston 16 has penetrated through a predetermined section of the duct 14.

In the embodiment illustrated, the end 20 of the piston 16 has a radial dimension smaller than the piston body and the piston 16 itself extends through the chamber 10.

The metering duct 14 communicates with a delivery nozzle 22 which, in the embodiment shown, has a discharge duct 24, preferably of constant cross-section. Valve means, shown overall by 26, are interposed between the delivery nozzle 22 and the metering duct 14.

From a functional point of view, the valve means may move between:
- a normal closed position, in which they close the lower discharge mouth 34 of the metering duct 14 so as to prevent the substance to be metered from flowing from the metering duct 14 to the nozzle 22 under the effect of gravity or under the effect of the overpressure in the chamber 10; and
- an open position, in which they enable the substance to be metered to flow from the metering duct 14 to the nozzle 22.

In the embodiment shown, the valve means 26 comprise a shutter, for instance a spherical shutter 30, which is held against the discharge mouth 34 of the metering duct 14 under the action of resilient means 32 formed in the embodiment by a helical spring.

The nozzle 22 comprises a body with an intermediate threaded section 36 which is screwed into a hole 40 of the delivery unit and with an end portion 38 which defines, between the radially external surface and the inner surface of the hole 40, a cylindrical volume in which the helical spring 32 is positioned.

The discharge duct 24 of the nozzle 22 extends from the end of the portion 38 to the discharge mouth 28.

The piston 16 is actuated with an alternating linear movement by means of a drive unit 6. The drive unit 6 may comprise any electric (for instance a motor of the brushless type), pneumatic or hydraulic motor and may be a rotary or linear motor; it will be appreciated that, in the case of a rotary motor, the drive unit 6 comprises means for converting the rotary movement of the drive shaft into the linear movement of the piston.

In the embodiment, a rotary motor is illustrated with a crank mechanism comprising a cam 42 and a crank 44 connected to the piston 16.

The metering machine of the invention is particularly adapted to be used in association with conveyor means, for instance a conveyor 46 which conveys the substrate or base product PB, on which the drops GC of substance C are deposited, with respect to the metering machine which is generally kept in a static position.

This conveyor 46 may be of generic type, for instance a belt (of steel or other material), a chain with moulds or rollers and may move intermittently or continuously at a fixed or variable speed.

Typically, the drops are deposited with a pitch P on the substrate PB moving forward with respect to the metering machine at a velocity Vt.

The motor 6 is typically a variable velocity motor, that can be controlled and synchronised with the speed of forward movement of the conveyor 46.

The metering machine makes it possible continuously to deposit, on the substrate PB, drops of a predetermined and adjustable weight in grams, with a pitch P between the drops that can be programmed, providing the drops with a high kinetic energy to cause their "plug" expulsion and reducing the possibility of "trails" between drops to a minimum.

By displacing the slide 4 vertically, it is possible to vary the volume of the drops. For a given velocity value Vt of the conveyor 46, it is possible to vary the pitch P by varying the frequency F of the alternating movement of the metering piston 16.

By varying the frequency F according to a programme set by means of a control unit, it is possible to obtain drops with a cyclically variable pitch in accordance with a predetermined design.

The diagram of Fig. 2 shows, in a qualitative manner, the angular velocity profile of the drive shaft (in the case of the rotary motor of Fig. 1) as a function of its angular position.

The angular speed, starting from a value Vₘᵢₙ (which may also be zero), corresponding to the angle 0 in which the piston 16 is in the beginning-of-stroke position, grows progressively to a value Vₘₐₓ at the angle of 180° to which the end-of-stroke position of the piston 16 corresponds.

In the retracted, beginning-of-stroke position of the piston 16, the substance C to be metered may flow into the metering duct 14 and the valve means 26 - which are in the closed position as a result of the thrust exerted by the spring 32 on the spherical shutter 30 - prevent the substance to be metered from flowing towards the nozzle.

The valve means 26 are actuated into the open position as a result of the pressure exerted on the shutter 30 by the substance to be metered under the action of the piston 16 which penetrates into the metering duct 14.

The substance to be metered flows through the annular area between the spherical shutter 30 and the inner surface of the duct 40 in which the shutter 30 is inserted and penetrates into the delivery duct 24 from which it is ejected in a projectile manner through the mouth 28 of the nozzle 22.

Increasing the velocity Vₘₐₓ increases the force of expulsion of the drop from the nozzle, with fewer possibilities of trails from drop to drop.

As shown in the diagram of Fig. 2, the angular speed of the drive shaft in the return stroke of the piston 16 from the forward end-of-stroke position to the retracted position (intake curve) may be slower than the angular speed in the metering stage.

In the return phase, the valve means 26 return to the position closing the metering duct 14 under the action of the resilient means 32.

In the metering stage, a plug flow takes place in the delivery duct 24 of the nozzle.

In a preferred embodiment (not shown), the expulsion of the substance to be metered via the nozzle 22 takes place in a direction inclined with respect to the horizontal plane in which the substrate PB lies; the angle α formed between the vector Vt of velocity of forward movement of the substrate PB on the conveyor belt 46 and the vector Vg of the velocity of expulsion is generally between 90° (direction of expulsion of the substance to be metered at right angles to the product) and 150°, but the angle α is preferably greater than 90° and is for instance between 100° and 120°.

It will be appreciated that in the preferred embodiment of delivery with an inclined jet, the axis a-a of the metering unit is correspondingly inclined with respect to the vertical to the plane in which the substrate is being conveyed.

Although the metering machine is illustrated here with reference to an embodiment which comprises a single delivery nozzle, it will be appreciated that the machine is particularly suited to be equipped with a plurality of nozzles disposed in formation which extend in a plane at right angles to the plane of the section of Fig. 1, so as to obtain the deposition thereon of at least one formation of drops extending on the substrate PB transverse to its direction of forward movement. It is also possible to use two or more formations of nozzles.

For this purpose, the chamber 10 communicates at the bottom with a plurality of metering ducts 14 and is traversed by a corresponding plurality of pistons 16. This plurality of pistons may be connected to a support bar or slide 48 which is actuated with a linear alternating movement by the drive means 6, by means of the crank mechanism 42, 44 or by other drive means such as a linear actuator.

A particular embodiment relates to the metering of chocolate brought to the fluid state, for instance to a temperature of more than 28°C .

A particular advantage in the case of the deposition of a plurality of drops via nozzles disposed in formation lies in the fact that the chamber 10 for the substance to be metered may be of small dimension, adapted to contain the minimum quantity needed of substance to be metered, thereby reducing the time in which it remains in the chamber 10 so that the substance to be metered is not subject to any deterioration of its rheological properties (tempering) at the casting temperature.

It will be appreciated that, without prejudice to the principles of the invention, embodiments and constructional details may be widely varied with respect to those described and illustrated by way of example.

It will in particular be appreciated - as mentioned above - that a preferred embodiment of the process of the invention makes use of a metering machine having a plurality of nozzles. The valve means may be modified with respect to those described and adapted to achieve the same operating functions.

## Claims

1. A process for the deposition of individual drops of a liquid substance (C) on a substrate (PB) with the use of a metering machine, comprising:
- a support structure (4),
- a metering unit (8), associated with the support structure (4), comprising a chamber (10) containing the substance (C) to be metered, communicating with at least one metering duct (14) provided with a delivery nozzle (22) at its end opposite the chamber (10),
- valve means (26) interposed between the metering duct (14) and the nozzle (22) which, in their normally closed position, prevent the substance (C) from flowing from the duct (14) to the nozzle (22),
- at least one piston (16) sliding in a leak-tight manner in the metering duct (14) and moving in an alternating manner between a retracted position, in which the substance (C) to be metered is able to flow from the chamber (10) to the metering duct (14), and a forward, end-of-stroke position within the metering duct (14), the displacement of the piston (16) between the retracted position and the forward position causing the valve means (26) to open and the metered quantity of substance (C) contained in the metering duct (14) to be expelled via the nozzle (22),
- actuator means (6) borne by the support structure (4) in order to cause the alternating movement of the piston (16) within the metering duct (14),
**characterised in that** said individual drops are ejected from said delivery nozzle onto said substrate while said substrate is in relative movement with respect to said delivery nozzle and **in that** said actuator means (6) are adapted to provide the piston (16), in its stroke from the retracted position to the forward position, with a kinetic energy sufficiently high such as to cause the expulsion of the substance (C) to be metered with a plug flow.

2. A process as claimed in claim 1, **characterised in that** the actuator means (6) are adapted to cause a progressive increase of the linear velocity of the piston (16) from the retracted, beginning-of-stroke position to the forward, end-of- stroke position in order to obtain the plug flow expulsion of the product from the nozzle.

3. A process as claimed in claim 1 or 2, **characterised in that** the actuator means (6) comprise a rotary motor of variable angular speed and crank mechanism means, associated with the piston (16) for the conversion of the rotary movement of the actuator means (6) into the alternating linear movement of the piston (16).

4. A process as claimed in any one of claims 1 to 3, **characterised in that** it comprises providing association conveyor means (46) adapted to provide the substrate (PB) with a relative movement with respect to the delivery nozzle (22).

5. A process as claimed in any one of claims 1 to 4, **characterised in that** the nozzle (22) is adapted to cause the expulsion of the substance (C) to be metered in a direction inclined with respect to the plane in which the substrate (PB) lies.

6. A process as claimed in any one of claims 1 to 4, **characterised in that** said metering machine is adapted to carry out the expulsion of the substance (C) to be metered via the nozzle (22) with a velocity of expulsion (Vg), where the vector of velocity (Vg) forms an angle α of between 90° and 150° with the vector (Vt) of the velocity of transport of the substrate (PB).

7. A process as claimed in claim 6, in which said angle α is between 100° and 120°.

8. A process as claimed in any one of the preceding claims, **characterised in that** the valve means (26) comprise a spherical shutter (30) and resilient means (32) tending to maintain the shutter (30) in the position closing the metering duct (14).

9. A process as claimed in any one of the preceding claims, **characterised in that** the valve means (26) are actuated into the open position under the effect of the pressure exerted by the piston (16) on the substance (C) contained in the metering duct (14).

10. A process as claimed in any one of the preceding claims, **characterised in that** said metering machine comprises regulation means (4) adapted to regulate the volume of substance (C) to be metered that is delivered.

11. A process as claimed in claim 10, **characterised in that** the regulation means comprise a slide (4) which bears the actuator means (6), the height of whose position can be adjusted.

12. A process as claimed in any one of the preceding claims, **characterised in that** said metering machine comprises a control unit associated with the actuator means (6) and adapted to enable the variation of the frequency (F) of the alternating strokes of the metering piston (16) in order to vary the pitch (P) between the drops (GC).

13. A process as claimed in any one of the preceding claims, **characterised in that** said metering machine comprises means for maintaining the liquid contained in the chamber (10) for the substance (C) to be metered in overpressure.

14. A process according to any of the preceding claims, in which the substance (C) to be metered is chocolate in the liquid state.

## Patentansprüche

1. Verfahren zur Deposition von einzelnen Tropfen einer flüssigen Substanz (C) auf einem Substrat (PB) unter Verwendung einer Messmaschine, umfassend:
- eine Halterungsstruktur (4),
- eine Messeinheit (8), die mit der Halterungsstruktur (4) verbunden ist, umfassend eine die zu messende Substanz (C) enthaltende Kammer (10), die mit zumindest einer Messleitung (14) kommuniziert, die mit einer Zuführdüse (22) an ihrem der Kammer (10) gegenüberliegenden Ende versehen ist,
- Ventilmittel (26), die zwischen der Messleitung (14) und der Düse (22) eingebracht sind, die in ihrer normal geschlossenen Position die Substanz (C) daran hindern, von der Leitung (14) zu der Düse (22) zu fließen,
- zumindest einen Kolben (16), der in einer dichten Weise in der Messleitung (14) gleitet und sich in einer abwechselnden Weise zwischen einer zurückgezogenen Position, in der die zu messende Substanz (C) dazu in der Lage ist, von der Kammer (10) zu der Messleitung (14) zu fließen, und einer Vorwärts-Hub-Endposition innerhalb der Messleitung (14) bewegt, wobei die Verschiebung des Kolbens (16) zwischen der zurückgezogenen Position und der Vorwärtsposition die Ventilmittel (26) dazu bringen, zu öffnen und die gemessene Menge der Substanz (C), die in der Messleitung (14) enthalten ist, über die Düse (22) auszustoßen,
- Betätigungsmittel (6), die durch die Halterungsstruktur (4) gehalten werden, um die abwechselnde Bewegung des Kolbens (16) innerhalb der Messleitung (14) zu bewirken,
**dadurch gekennzeichnet, dass** die einzelnen Tropfen aus der Zuführdüse auf das Substrat ausgestoßen werden, während das Substrat in einer relativen Bewegung in Bezug auf die Zuführdüse ist, und dass die Betätigungsmittel (6) dazu angepasst sind, den Kolben (16) in seinem Hub von der zurückgezogenen Position zur Vorwärtsposition mit einer ausreichend hohen kinetischen Energie zu versorgen, dass das Ausstoßen der zu messenden Substanz (C) mit einer idealen Strömung bewirkt wird.

2. Verfahren nach Anspruch 1, **dadurch gekennzeichnet, dass** die Betätigungsmittel (6) dazu angepasst sind, einen progressiven Anstieg der linearen Geschwindigkeit des Kolbens (16) von der zurückgezogenen Hub-Anfangsposition zu der Vorwärts-Hub-Endposition zu bewirken, um die ideale Strömung beim Ausstoßen des Produkts aus der Düse zu erhalten.

3. Verfahren nach Anspruch 1 oder 2, **dadurch gekennzeichnet, dass** die Betätigungsmittel (6) einen Rotationsmotor variabler Winkelgeschwindigkeit und Kurbelmechanismusmittel umfassen, die für eine Konvertierung der Rotationsbewegung der Betätigungsmittel (6) in die abwechselnde lineare Bewegung des Kolbens (16) mit dem Kolben (16) verbunden sind.

4. Verfahren nach einem der Ansprüche 1 bis 3, **dadurch gekennzeichnet, dass** es ein Bereitstellen eines Gemeinschaftsförderungsmittels (46) umfasst, das dazu angepasst ist, das Substrat (PB) mit einer Relativbewegung in Bezug auf die Zuführdüse (22) zu versehen.

5. Verfahren nach einem der Ansprüche 1 bis 4, **dadurch gekennzeichnet, dass** die Düse (22) dazu angepasst ist, das Ausstoßen der zu messenden Substanz (C) in eine in Bezug auf die Ebene, in der das Substrat (PB) liegt, geneigte Richtung zu bewirken.

6. Verfahren nach einem der Ansprüche 1 bis 4, **dadurch gekennzeichnet, dass** die Messmaschine dazu angepasst ist, das Ausstoßen der zu messenden Substanz (C) über die Düse (22) mit einer Ausstoßgeschwindigkeit (Vg) durchzuführen, wobei der Geschwindigkeitsvektor (Vg) einen Winkel α von zwischen 90° und 150° mit dem Vektor (Vt) der Transportgeschwindigkeit des Substrats (PB) bildet.

7. Verfahren nach Anspruch 6, wobei der Winkel α zwischen 100° und 120° liegt.

8. Verfahren nach einem der vorhergehenden Ansprüche, **dadurch gekennzeichnet, dass** die Ventilmittel (26) einen sphärischen Schließer (30) und ein elastisches Mittel (32) umfassen, das dazu neigt, den Schließer (30) in der die Messleitung (14) schließenden Position zu halten.

9. Verfahren nach einem der vorhergehenden Ansprüche, **dadurch gekennzeichnet, dass** die Ventilmittel (26) unter dem Effekt des Drucks, der durch den Kolben (16) auf die in der Messleitung (14) enthaltene Substanz (C) ausgeübt wird, in die geöffnete Position betätigt werden.

10. Verfahren nach einem der vorhergehenden Ansprüche, **dadurch gekennzeichnet, dass** die Messmaschine Reguliermittel (4) umfasst, die dazu angepasst sind, das Volumen der zu messenden Substanz (C), das abgegeben wird, zu regulieren.

11. Verfahren nach Anspruch 10, **dadurch gekennzeichnet, dass** das Reguliermittel einen Gleiter (4) umfasst, der die Betätigungsmittel (6) lagert, wobei die Höhe von dessen Position eingestellt werden kann.

12. Verfahren nach einem der vorhergehenden Ansprüche, **dadurch gekennzeichnet, dass** die Messmaschine eine Steuerungseinheit umfasst, die mit den Betätigungsmitteln (6) verbunden und dazu angepasst ist, die Variation der Frequenz (F) der abwechselnden Hübe des Messkolbens (16) zu ermöglichen, um den Abstand (P) zwischen den Tropfen (GC) zu variieren.

13. Verfahren nach einem der vorhergehenden Ansprüche, **dadurch gekennzeichnet, dass** die Messmaschine Mittel zum auf Überdruck Halten der Flüssigkeit, die in der Kammer (10) für die zu messende Substanz (C) enthalten ist, umfasst.

14. Verfahren nach einem der vorhergehenden Ansprüche, bei dem die zu messende Substanz (C) Schokolade im flüssigen Zustand ist.

## Revendications

1. Procédé pour le dépôt de gouttes individuelles d'une substance liquide (C) sur un substrat (PB) à l'aide d'une machine de dosage, comprenant :
- une structure de support (4),
- une unité de dosage (8) associée à la structure de support (4), comprenant une chambre (10) contenant la substance (C) à doser, communiquant avec au moins un conduit de dosage (14) pourvu d'une buse de distribution (22) à son extrémité en regard de la chambre (10),
- des moyens formant vannes (26) disposés entre le conduit de dosage (14) et la buse (22) qui, dans leur position normalement fermée, empêchent la substance (C) de s'écouler du conduit (14) à la buse (22),
- au moins un piston (16) glissant, de manière étanche, dans le conduit de dosage (14) et se déplaçant en va-et-vient entre une position rétractée, dans laquelle la substance (C) à doser est apte à s'écouler de la chambre (10) au conduit de dosage (14), et une position avant, de fin de course, au sein du conduit de dosage (14), le déplacement du piston (16) entre la position rétractée et la position avant amenant les moyens formant vannes (26) à s'ouvrir et la quantité dosée de substance (C) contenue dans le conduit de dosage (14) à être expulsée par le biais de la buse (22),
- des moyens d'actionnement (6) supportés par la structure de support (4) afin de produire le mouvement de va-et-vient du piston (16) au sein du conduit de dosage (14),
**caractérisé en ce que** lesdites gouttes individuelles sont éjectées de ladite buse de distribution sur ledit substrat tandis que ledit substrat est en mouvement relatif par rapport à ladite buse de distribution et **en ce que** lesdits moyens d'actionnement (6) sont aptes à doter le piston (16), dans sa course de la position rétractée à la position avant, d'une énergie cinétique suffisamment élevée pour provoquer l'expulsion de la substance (C) devant être dosée avec un écoulement dit à bouchons.

2. Procédé selon la revendication 1, **caractérisé en ce que** les moyens d'actionnement (6) sont aptes à provoquer une augmentation progressive de la vitesse linéaire du piston (16) de la position rétractée, de début de course, à la position avant, de fin de course, afin d'obtenir l'expulsion en l'écoulement dit à bouchons du produit depuis la buse.

3. Procédé selon la revendication 1 ou 2, **caractérisé en ce que** les moyens d'actionnement (6) comprennent un moteur rotatif à vitesse angulaire variable et un mécanisme de manivelle, associés au piston (16) pour convertir le mouvement de rotation du moyen d'actionnement (6) en le mouvement linéaire de va-et-vient du piston (16).

4. Procédé selon l'une quelconque des revendications 1 à 3, **caractérisé en ce qu'**il comprend la fourniture d'un moyen formant transporteur d'association (46) apte à doter le substrat (PB) d'un mouvement relatif par rapport à la buse de distribution (22).

5. Procédé selon l'une quelconque des revendications 1 à 4, **caractérisé en ce que** la buse (22) est apte à provoquer l'expulsion de la substance (C) devant être dosée dans une direction inclinée par rapport au plan dans lequel se situe le substrat (PB).

6. Procédé selon l'une quelconque des revendications 1 à 4, **caractérisé en ce que** ladite machine de dosage est apte à réaliser l'expulsion de la substance (C) devant être dosée par le biais de la buse (22) avec une vitesse d'expulsion (Vg), le vecteur de vitesse (Vg) formant un angle α compris entre 90° et 150° avec le vecteur (Vt) de la vitesse de transport du substrat (PB).

7. Procédé selon la revendication 6, dans lequel ledit angle α est compris entre 100° et 120°.

8. Procédé selon l'une quelconque des revendications précédentes, **caractérisé en ce que** les moyens formant vannes (26) comprennent un volet sphérique (30) et un moyen élastique (32) ayant tendance à garder le volet (30) dans la position fermant le conduit de dosage (14).

9. Procédé selon l'une quelconque des revendications précédentes, **caractérisé en ce que** les moyens formant vannes (26) sont actionnés jusque dans la position ouverte sous l'effet d'une pression exercée par le piston (16) sur la substance (C) contenue dans le conduit de dosage (14).

10. Procédé selon l'une quelconque des revendications précédentes, **caractérisé en ce que** ladite machine de dosage comprend un moyen de réglage (4) apte à régler le volume de substance (C) devant être dosée qui est distribuée.

11. Procédé selon la revendication 10, **caractérisé en ce que** le moyen de réglage (4) comprend une coulisse (4) qui porte le moyen d'actionnement (6), dont la hauteur de position peut être ajustée.

12. Procédé selon l'une quelconque des revendications précédentes, **caractérisé en ce que** ladite machine de dosage comprend une unité de commande associée aux moyens d'actionnement (6) et apte à permettre la variation de la fréquence (F) des courses en va-et-vient du piston de dosage (16) afin de faire varier le pas (P) entre les gouttes (GC).

13. Procédé selon l'une quelconque des revendications précédentes, **caractérisé en ce que** ladite machine de dosage comprend un moyen pour maintenir sous surpression le liquide contenu dans la chambre (10) pour la substance (C) à doser.

14. Procédé selon l'une quelconque des revendications précédentes, dans lequel la substance (C) à doser est du chocolat à l'état liquide.
